# EUROPEAN PATENT APPLICATION

(11) **EP 4 436 057 A1**
(43) Date of publication of application: **25.09.2024**
(21) Application number: 22892853.7
(22) Date of filing: 10.11.2022
(51) Int. Cl.: H04B 7/0413, H04L 27/26, H04W 72/0446, H04W 72/1263, H04W 72/20

(54) **TERMINAL, WIRELESS COMMUNICATION METHOD, AND BASE STATION**

(30) Priority: 15.11.2021 JP 2021185997
(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2022/041877
(87) International publication number: WO 2023/085355

(57) **Abstract**

To appropriately perform communication even when a plurality of DL transmissions / UL transmissions are scheduled by one or more TRPs. A terminal according to one aspect of the present disclosure includes: a receiving section that receives downlink control information for scheduling a plurality of shared channels supporting a unified transmission configuration indicator (TCI); and a control section that controls reception or transmission of the plurality of shared channels, based on a first TCI state configured commonly for a plurality of channels or a plurality of transmission directions or a second TCI state different from the first TCI state.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that one or a plurality of transmission/reception points (TRPs) (multi-TRP) schedule DL transmission (for example, downlink shared channel (for example, PDSCH) transmission) / UL transmission (for example, uplink shared channel (for example, PUSCH) transmission) to a terminal (user terminal, User Equipment (UE)) by using one or a plurality of panels (multi-panel).

For example, in NR, it is also assumed that one or a plurality of transmission/reception points perform transmission/reception of a plurality of signals/channels (for example, multi-PDSCH). For example, it is conceivable that one or more transmission/reception points use one or a plurality of pieces of downlink control information (for example, DCI) / downlink control channels (for example, PDCCHs) to control scheduling of multi-PDSCH transmission / multi-PUSCH transmission.

However, in previous NR specifications, it is not sufficiently studied how to perform transmission control (for example, TCI state / QCL assumption and the like) when one or more TRPs schedule a plurality of DL transmissions / UL transmissions.

In view of this, the present disclosure has one object to provide a terminal, a radio communication method, and a base station that enable appropriate communication even when a plurality of DL transmissions / UL transmissions are scheduled by one or more TRPs. Solution to Problem

A terminal according to one aspect of the present disclosure includes: a receiving section that receives downlink control information for scheduling a plurality of shared channels supporting a unified transmission configuration indicator (TCI); and a control section that controls reception or transmission of the plurality of shared channels, based on a first TCI state configured commonly for a plurality of channels or a plurality of transmission directions or a second TCI state different from the first TCI state.

### Advantageous Effects of Invention

According to one aspect of the present disclosure, it is possible to appropriately perform communication even when a plurality of DL transmissions / UL transmissions are scheduled by one or more TRPs.

### Brief Description of Drawings

[FIG. 1] FIGS. 1A and 1B are diagrams to show examples of a unified/common TCI framework.
[FIG. 2] FIG. 2 is a diagram to show examples of control of schedule of a physical shared channel based on a PDCCH/DCI.
[FIG. 3] FIG. 3 is a diagram to show an example of a scheduling offset between a PDCCH and a PDSCH.
[FIG. 4] FIG. 4 is a diagram to show another example of the scheduling offset between a PDCCH and a PDSCH.
[FIG. 5] FIG. 5 is a diagram to show an example of a case where multi-PDSCH is scheduled by a PDCCH.
[FIG. 6] FIGS. 6A and 6B are each a diagram to show an example of an SRI(s) applied to multi-PUSCH in the present embodiment.
[FIG. 7] FIGS. 7A and 7B are each a diagram to show an example of a TCI state(s) applied to multi-PDSCH in the present embodiment.
[FIG. 8] FIGS. 8A and 8B are each a diagram to show an example of a TCI state(s) applied to multi-PUSCH in the present embodiment.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.
[FIG. 13] FIG. 13 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case where the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of the one or more TRPs may be defined. For example, the number N (≥ 1) of TCI states applied to a UL channel/RS (UL TCI states) and the number M (≥ 1) of TCI states applied to a DL channel/RS (DL TCI states) may be defined. At least one of N and M may be notified/configured/indicated to the UE via higher layer signaling / physical layer signaling.

In the present disclosure, when it is described that N = M = X (X is any integer), this may mean that X TCI states (corresponding to X TRPs) common to UL and DL (joint TCI states) are notified/configured/indicated to the UE. When it is described that N = X (X is any integer) and M = Y (Y is any integer, Y = X may hold), this may mean that X UL TCI states (corresponding to X TRPs) and Y DL TCI states (corresponding to Y TRPs) (in other words, separate TCI states) are notified/configured/indicated separately to the UE.

For example, when it is described that N = M = 1, this may mean that one TCI state common to UL and DL for a single TRP is notified/configured/indicated to the UE (joint TCI state for a single TRP).

For example, when it is described that N = 1 and M = 1, this may mean that one UL TCI state and one DL TCI state for a single TRP are notified/configured/indicated separately to the UE (separate TCI states for a single TRP).

For example, when it is described that N = M = 2, this may mean that a plurality of (two) TCI states common to UL and DL for a plurality of (two) TRPs are notified/configured/indicated to the UE (joint TCI states for a plurality of TRPs).

For example, when it is described that N = 2 and M = 2, this may mean that a plurality of (two) UL TCI states and a plurality of (two) DL TCI states for a plurality of (two) TRPs are notified/configured/indicated to the UE (separate TCI states for a plurality of TRPs).

Note that, in the above example, cases where the values N and M are each one or two have been described. However, the values N and M may each be three or more, or N and M may be different from each other.

In Rel. 17, it is studied to support N = M = 1. In Rel. 18 and later versions, it is studied to support other cases.

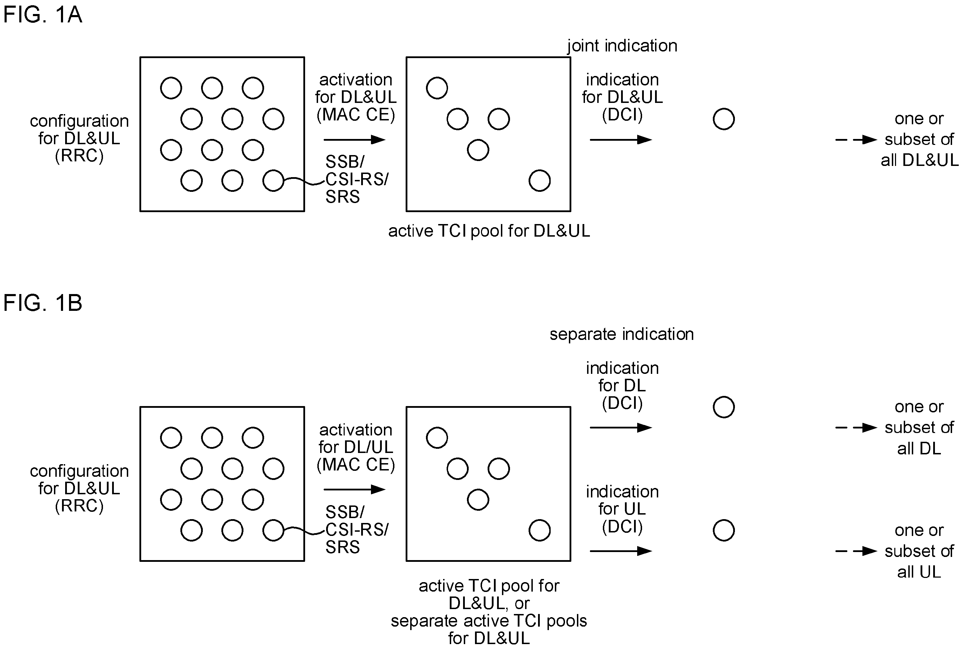

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Beam indication DCI for a unified/common TCI state may be DCI format 1_1/1_2 with DL assignment (scheduling).

The beam indication DCI for a unified/common TCI state may be DCI format 1_1/1_2 without DL assignment (scheduling) or may be a new DCI format. This is useful when DL data is absent but a beam indication for a unified/common TCI state is present.

### (Multi-TRP PDSCH)

For NR, it is studied that one or a plurality of transmission/reception points (TRPs) (multi-TRP (multi TRP (MTRP))) perform DL transmission to a UE by using one or a plurality of panels (multi-panel). It is also studied that the UE performs UL transmission to the one or plurality of TRPs by using one or a plurality of panels.

Note that the plurality of TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI, single PDCCH) (single master mode, multi-TRP based on single DCI (single-DCI based multi-TRP)). The plurality of PDSCHs from the multi-TRP may be separately scheduled by using a plurality of pieces of DCI (multi-DCI, multi-PDCCH (multiple PDCCHs)) (multi-master mode, multi-TRP based on multi-DCI (multi-DCI based multi-TRP)).

For Ultra-Reliable and Low Latency Communications (URLLC) for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, reliability enhancement schemes, for example, schemes 1a, 2a, 2b, 3, and 4). In scheme 1a, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

To support intra-cell (with the same cell ID) and inter-cell (with different cell IDs) multi-TRP transmission based on a plurality of PDCCHs, one control resource set (CORESET) in PDCCH configuration information (PDCCH-Config) may correspond to one TRP in RRC configuration information for linking a plurality of pairs of a PDCCH and a PDSCH with a plurality of TRPs.

When at least one of conditions 1 and 2 below is satisfied, the UE may determine that it is multi-TRP based on multi-DCI. In this case, a TRP may be interpreted as a CORESET pool index.

### {Condition 1}

One CORESET pool index is configured.

### {Condition 2}

Two different values (for example 0 and 1) of a CORESET pool index are configured.

When the following condition is satisfied, the UE may determine that it is multi-TRP based on single DCI. In this case, two TRPs may be interpreted as two TCI states indicated by a MAC CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (QCL Rule)

A unified TCI state of Rel. 17 (indicated/updated by a MAC CE / DCI of Rel. 17) may be shared with UE-dedicated reception on a PDSCH/PDCCH, or need not be shared with the UE-dedicated reception.

A QCL rule for a unified TCI state of Rel. 17 may be different depending on whether the unified TCI state of Rel. 17 is shared with UE-dedicated reception on a PDSCH/PDCCH. For example, all the QCL rules defined in existing specifications (options B1 to B3 to be described below) may be supported for a DL channel/RS not sharing the same Rel-17 unified TCI state as that of the UE-dedicated reception on the PDSCH/PDCCH. For example, at least one QCL rule in options A1 and A2 below may be supported regarding source RS and QCL type, for a DL channel/RS sharing the same Rel-17 unified TCI state as that of the UE-dedicated reception on the PDSCH/PDCCH.

### {Option A1}

A tracking RS (TRS) is configured for source RS of QCL type A, and a CSI-RS for beam management (BM) (CSI-RS with repetition) is configured for QCL type D source RS.

### {Option A2}

A TRS is configured for source RS of QCL type A and source RS for QCL type D.

QCL rules are defined in existing specifications. For example, for PDSCH/PDCCH, options B1 to B3 below are permitted.

### {Option B1}

A QCL type A RS is a TRS (CSI-RS with TRS information (trs-Info)), and a type D RS is a CSI-RS with repetition (CSI-RS for BM).

### {Option B2}

A QCL type A RS is a TRS (CSI-RS with trs-Info), and a type D RS is the same as the QCL type A RS.

### {Option B3}

A QCL type A RS is a CSI-RS without trs-Info and without repetition, and a type D RS is the same as the QCL type A RS.

For a CSI-RS resource in a non-zero power (NZP)-CSI-RS resource set (NZP-CSI-RS-ResourceSet) configured without trs-info and without repetition, the UE assumes that a TCI state (TCI-State) indicates one of one or more QCL types below.
- Type A with a CSI-RS resource in an NZP-CSI-RS resource set configured with trs-Info, and type D with the same CSI-RS resource if applicable.
- Type A with a CSI-RS resource in an NZP-CSI-RS resource set configured with trs-Info, and type D with an SS/PBCH block if applicable.
- Type A with a CSI-RS resource in an NZP-CSI-RS resource set configured with trs-Info, and type D with a CSI-RS resource in an NZP-CSI-RS resource set configured with repetition if applicable.
- If type D is not applicable, type B with a CSI-RS resource in an NZP-CSI-RS resource set configured with trs-Info.

### (Default TCI State)

In Rel. 16, a PDSCH may be scheduled by DCI with a TCI field. The TCI state for the PDSCH is indicated by the TCI field. The TCI field of DCI format 1-1 is constituted of three bits, and the TCI field of DCI format 1-2 is constituted of three bits at maximum.

In an RRC connected mode, if a first information element of TCI in DCI (higher layer parameter tci-PresentInDCI) is set at "enabled" for a CORESET for scheduling a PDSCH, the UE assumes that a TCI field is present in DCI format 1 1 of a PDCCH transmitted in the

### CORESET.

If the UE is configured with a second information element of TCI in DCI (higher layer parameter tci-PresentInDCI-1-2) for the CORESET for scheduling the PDSCH, the UE assumes that a TCI field with a DCI field size indicated by the second information element of TCI in DCI is present in DCI format 1_2 of a PDSCH transmitted in the CORESET.

In Rel. 16, a PDSCH may be scheduled by DCI with no TCI field. The DCI format of the DCI may be DCI format 1_0 or DCI format 1_1/1_2 in a case where an information element of TCI in DCI (higher layer parameter tci-PresentInDCI or tci-PresentInDCI-1-2) is not configured (at enabled). When a PDSCH is scheduled by DCI with no TCI field and if a time offset between reception of DL DCI (DCI for scheduling the PDSCH (scheduling DCI)) and a corresponding PDSCH (PDSCH scheduled by the DCI) is equal to or larger than a threshold (timeDurationForQCL), the UE assumes that the TCI state or QCL assumption for the PDSCH is the same as the TCI state or QCL assumption (default TCI state) of a CORESET (for example, the scheduling DCI).

In an RRC connected mode, in both a case where an information element of TCI in DCI (higher layer parameter tci-PresentInDCI and tci-PresentInDCI-1-2) is set as "enabled" and a case where the information element of TCI in DCI is not configured, when a time offset between reception of DL DCI (DCI for scheduling a PDSCH) and the corresponding PDSCH (PDSCH scheduled by the DCI) is less than a certain threshold (timeDurationForQCL) (application condition, first condition), the TCI state (default TCI state) of a PDSCH may be the TCI state corresponding to the lowest CORESET ID (for example, lowest CORESET ID) in the latest slot in an active DL BWP in the CC (of a specific UL signal) if non-cross carrier scheduling is performed. Otherwise, the TCI state (default TCI state) of the PDSCH may be the TCI state of the lowest TCI state ID (for example, lowest TCI state ID) of the PDSCHs in the active DL BWP in a scheduled CC.

The certain threshold may be referred to as time duration for QCL, "timeDurationForQCL," "Threshold," "Threshold for offset between a DCI indicating a TCI state and a PDSCH scheduled by the DCI," "Threshold-Sched-Offset," and "beamSwitchTiming," a schedule offset threshold, a scheduling offset threshold, and the like. The threshold may be reported by the UE as UE capability (of each subcarrier spacing).

In a case where an offset between reception of DL DCI and a PDSCH corresponding to the DL DCI is smaller than the threshold timeDurationForQCL, where at least one TCI state configured for the serving cell of the scheduled PDSCH includes "QCL type D," where the UE is configured with two-default-TCI enabling information element (enableTwoDefaultTCIStates-r16), and where at least one TCI codepoint (codepoint in the TCI field in the DL DCI) indicates two TCI states, the UE assumes that the PDSCH of the serving cell or a DMRS port of a PDSCH transmission occasion is QCLed (quasi co-located) with an RS related to a QCL parameter associated with two TCI states corresponding to the lowest codepoint among TCI codepoints including two different TCI states (two-default-QCL-assumption determination rule). The two-default-TCI enabling information element indicates to enable Rel-16 operation for two default TCI states for PDSCH in a case of mapping at least one TCI codepoint to two TCI states.

As a default TCI state of a PDSCH in Rel. 15/16, specifications of a default TCI state for a single TRP, a default TCI state for multi-TRP based on multi-DCI, and a default TCI state for multi-TRP based on single DCI have been drafted.

### <Allocation of Time Domain Resource>

In existing systems (for example, Rel. 15), time-domain resource allocation information for a physical shared channel (at least one of a PDSCH and a PUSCH) is included in downlink control information (DCI). A network (for example, a base station) uses a certain field (for example, a TDRA field) included in DCI to notify the UE of information related to time-domain resources in which a physical shared channel scheduled by the DCI is scheduled.

The information related to time-domain resources may include at least one of information indicating an offset between the DCI and the physical shared channel (for example, a slot offset K0), information indicating a start symbol (for example, a start symbol S), and information indicating the length of the physical shared channel (for example, a length L), for example.

Each piece of bit information (or codepoint) notified by the TDRA field may be associated with a different time-domain resource allocation candidate (or entry). For example, a table (for example, a TDRA table) in which each piece of bit information and a time-domain resource allocation candidate (K0, S, L) are associated may be defined. The time-domain resource allocation candidates may be defined in a specification in advance or may be notified/configured for the UE by higher layer signaling.

### {PDSCH}

The UE may determine a row index (entry number or entry index) in a certain table, based on the value of the TDRA field in DCI (for example, DCI format 1_0/1_1/1_2). The certain table may include at least one of information indicating a time offset (for example, the slot offset KO) between DCI and a PDSCH scheduled by the DCI, information indicating the mapping type of the PDSCH, and the start symbol S and the time length L of the PDSCH. The combination of the start symbol S and the time length L of the PDSCH may be referred to as a Start and Length Indicator (SLIV).

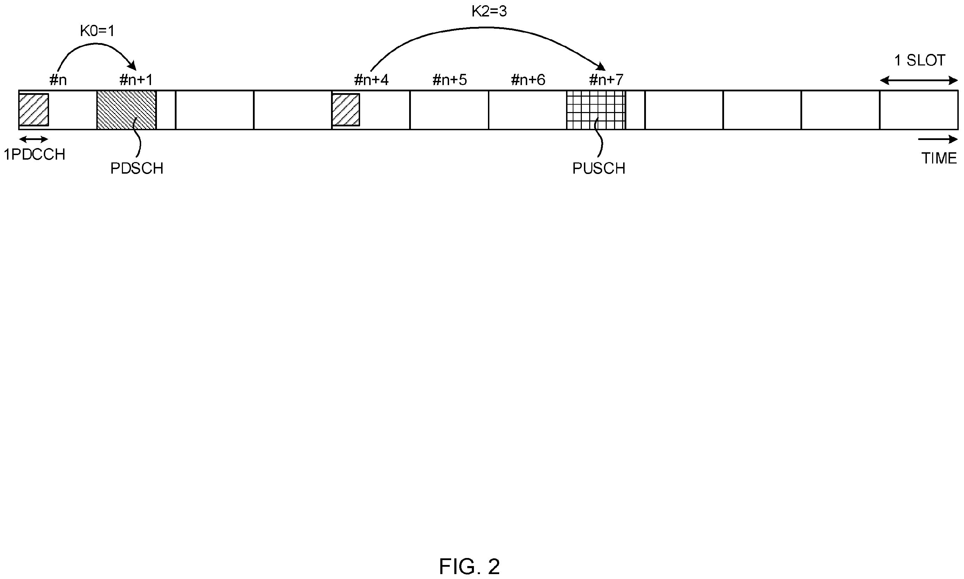

The UE may determine a time-domain resource in which a PDSCH is scheduled, based on at least one of the value of a certain field included in the DCI, slot offset K0 information defined in the table, a mapping type, the start symbol S, the symbol length L, and the SLIV (refer to FIG. 2). Note that a reference point for the start symbol S and the symbol length L may be controlled based on the start position (first symbol) of a corresponding slot. The start symbol S, the symbol length L, and the like may be defined according to the mapping type of the PDSCH.

As shown in FIG. 2, the UE judges a slot in which a PDSCH is scheduled, with DCI (or the PDCCH used for transmission of the DCI) as a reference point in the time domain. For example, when the UE receives the DCI for scheduling the PDSCH in slot #n, the UE may determine a slot in which the PDSCH is received (allocated to the PDSCH), based on at least one of the number n of the slot, subcarrier spacing µ_{PDSCH} for PDSCH, subcarrier spacing µ_{PDCCH} for PDCCH, and the time offset K0. Here, shown is a case where the slot offset K0 = 1 and subcarrier spacing of the PDSCH and subcarrier spacing of the PDCCH are the same.

For resource allocation information (for example, the SLIV) indicated by the TDRA field, the UE determines allocation of the PDSCH with the start point of the slot to which the PDSCH is allocated as a reference. Note that the reference point may be referred to as a point of reference or a point for reference.

### {PUSCH}

The UE may determine a row index (entry number or entry index) in a certain table, based on the value of the TDRA field in DCI (for example, DCI format 0_0/0_1/0_2). The certain table may include at least one of information indicating a time offset (for example, the slot offset K2) between DCI and a PUSCH scheduled by the DCI, information indicating the mapping type of the PUSCH, and the start symbol S and the time length L of the PUSCH. The combination of the start symbol S and the time length L of the PUSCH may be referred to as a Start and Length Indicator (SLIV).

The UE may determine a time-domain resource in which a PUSCH is scheduled, based on at least one of the value of a certain field included in the DCI, slot offset K2 information defined in the table, a mapping type, the start symbol S, the symbol length L, and the SLIV (refer to FIG. 2). Note that a reference point for the start symbol S and the symbol length L may be controlled based on the start position (first symbol) of a corresponding slot. The start symbol S, the symbol length L, and the like may be defined according to the mapping type of the PUSCH.

As shown in FIG. 2, the UE judges a slot in which a PUSCH is scheduled, with DCI (or the PDCCH used for transmission of the DCI) as a reference point in the time domain. For example, when the UE receives the DCI for scheduling the PUSCH in slot #(n + 4), the UE may determine a slot in which the PUSCH is transmitted (allocated to the PUSCH), based on at least one of the number (n + 4) of the slot, subcarrier spacing µ_{PUSCH} for PUSCH, subcarrier spacing µ_{PUCCH} for PUCCH, and the time offset K2. Here, shown is a case where the slot offset K2 = 3 and subcarrier spacing of the PDSCH and subcarrier spacing of the PDCCH are the same.

For resource allocation information (for example, the SLIV) indicated by the TDRA field, the UE determines allocation of the PUSCH with the start point of the slot to which the PUSCH is allocated as a reference.

In future NR, it is considered that, from a viewpoint of reducing load of operation of switching between a unified TCI state introduced/supported in Rel. 17 and a TCI state (for example, DL) / spatial relation (for example, UL) defined in Rel. 15/16, only one of the TCI states is configured/applied.

In the same band, it is assumed that a beam (for example, RS with a TCI state of QCL type D) is in common for each CC (for example, a common SSB between CCs). However, a case of supporting that a Rel-15 TCI state / spatial relation and a Rel-17 TCI state are configured in different CCs. In this case, it is also conceivable to have a configuration that making clear about a Rel-15/16 TCI state / spatial relation and a Rel-17 TCI state or applying/configuring only one of the Rel-15/16 TCI state / spatial relation and the Rel-17 TCI state in the same band.

Moreover, in consideration of UE load, it is also assumed to have a configuration of applying/configuring only one of a Rel-15/16 TCI state / spatial relation and a Rel-17 TCI state in all the bands.

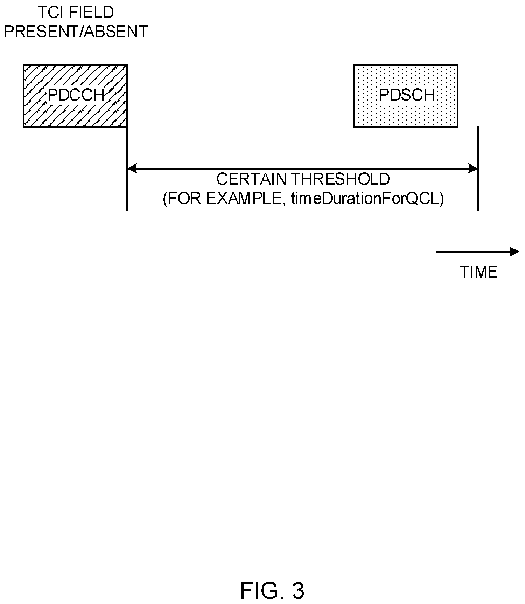

In existing systems (for example, Rel. 16), when an offset between DCI and a PDSCH is smaller than a certain threshold (for example, timeDurationForQCL) for a single PDSCH in a single TRP (refer to FIG. 3), the UE may assume that the PDSCH (or a DMRS port of the PDSCH) is QCLed with a CORESET with the lowest CORESET ID in the latest slot in an active BWP of a serving cell. In other words, the UE may apply the QCL (or the TCI state) of the CORESET with the lowest CORESET ID in the latest slot in the active BWP of the serving cell to the PDSCH.

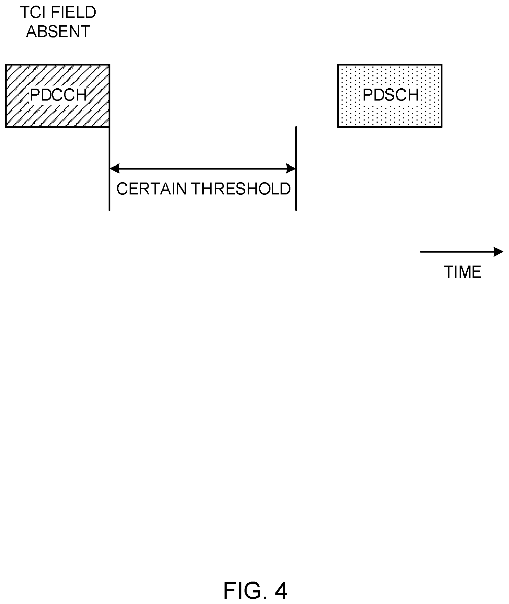

In existing systems (for example, Rel. 16), when an offset between DCI and a PDSCH is equal to or larger than the certain threshold (for example, timeDurationForQCL) for a single PDSCH in a single TRP and no TCI field is present in the DCI (refer to FIG. 4), the UE may assume that the QCL of the PDSCH (or a DMRS port of the PDSCH) is the same as the QCL of a CORESET for scheduling the PDSCH. The CORESET for scheduling the PDSCH may be interpreted as a CORESET corresponding to a scheduling PDCCH/DCI of the PDSCH.

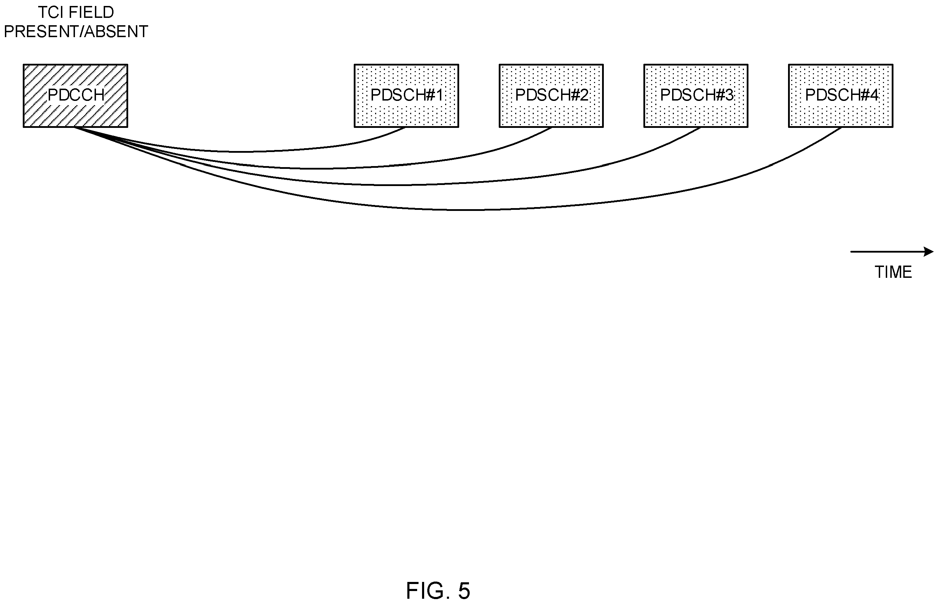

In Rel. 17 or later versions, it is assumed that multi-PDSCH scheduled by single DCI is supported in a certain frequency range (for example, B52.6 (FR2-2)) (refer to FIG. 5). In this case, a problem is how to configure QCL / TCI state (for example, default QCL / TCI state) of the multi-PDSCH.

For example, when multi-PDSCH is configured based on a TCI state / spatial relation defined in Rel. 15/16, at least one of case 1 to case 3 below may be applied.

### <Case 1>

A case where no TCI state field is present in DCI and the DCI schedules one or more PDSCHs and that the period between the DCI and the PDSCH(s) (for example, the PDSCH scheduled first in the time domain) is equal to or longer than the certain period (for example, timeDurationForQCL) is assumed. In such a case, the QCL assumption / TCI state corresponding to the scheduling PDCCH may be applied to a plurality of PDSCHs (for example, all the PDSCHs).

### <Case 2>

A case where a TCI state field is present in DCI and the DCI schedules one or more PDSCHs and where the period between the DCI and the PDSCH(s) (for example, the PDSCH scheduled first in the time domain) is equal to or longer than the certain period (for example, timeDurationForQCL) is assumed. In such a case, the TCI state indicated by the DCI may be applied to a plurality of PDSCHs (for example, all the PDSCHs).

<Case 3>

A case where the period between DCI and the PDSCH(s) (for example, the PDSCH scheduled first in the time domain) is shorter than the certain period (for example, timeDurationForQCL) irrespective of whether a TCI state field is present in the DCI is assumed. In such a case, a certain default TCI state may be applied to a plurality of PDSCHs (for example, all the PDSCHs).

Meanwhile, in Rel. 17 or later versions, it is also assumed that a unified TCI state is configured for / applied to / activated for / supported for multi-PDSCH/PUSCH. Specifically, a problem is how to control, when a unified TCI state is configured/activated for a channel/signal in a certain transmission direction / one or more channels/signals, a TCI state to be applied to /assumed for a plurality of PDSCHs / PUSCHs (for example, multi-PDSCH/PUSCH) scheduled by DCI.

The inventors of the present invention focused on a case where a unified TCI state is configured for a plurality of shared channels, studied how to configure/apply/judge QCL assumption / TCI state in such a case, and came up with one aspect of the present embodiment.

The inventors of the present invention also studied, for a plurality of PUSCHs, QCL assumption / TCI state to be applied to each of the PUSCHs and came up with one aspect of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a common beam, common TCI, a common TCI state, a TCI state of Rel. 17, a TCI state of Rel. 17 or later versions, unified TCI, a unified TCI state, a TCI state applied to a plurality of types of channels/RSs, a TCI state applied to a plurality of (plurality of types of) channels/RSs, a TCI state applicable to a plurality of types of channels/RSs, a TCI state for a plurality of types of signals, a TCI state for a plurality of types of channels/RSs, a TCI state, a unified TCI state, UL and DL TCI states for joint TCI indication, a TCI state for UL only for separate TCI indication, a TCI state for DL only for separate TCI indication, a joint TCI state for DL and UL, and a separate TCI state for each of DL and UL may be interchangeably interpreted.

In the present disclosure, a TCI state of Rel. 15/16, TCI state / spatial relation applied only to a specific channel/RS, and a TCI state / spatial relation applied to one type of channel/RS may be interchangeably interpreted.

In the present disclosure, a plurality of TCI states configured by an RRC IE, a plurality of TCI states activated by a MAC CE, information related to one or more TCI states, a TCI state configuration, a TCI state pool, an active TCI state pool, a common TCI state pool, a unified TCI state pool, a TCI state list, a unified TCI state list, a joint TCI state pool, a separate TCI state pool, a separate DL/UL TCI state pool, a DL TCI state pool, a UL TCI state pool, a separate DL TCI state pool, and a separate UL TCI state pool may be interchangeably interpreted.

In the present disclosure, DL TCI, DL only TCI, separate DL only TCI, DL common TCI, DL unified TCI, common TCI, and unified TCI may be interchangeably interpreted. In the present disclosure, UL TCI, UL only TCI, separate UL only TCI, UL common TCI, UL unified TCI, common TCI, and unified TCI may be interchangeably interpreted.

In the present disclosure, a channel/RS to which a unified TCI is applied may be a PDSCH/PDCCH/CSI-RS/PUSCH/PUCCH/SRS.

In the present disclosure, a BWP, a CC (cell), and a CC (cell) / BWP may be interchangeably interpreted.

### (Radio Communication Method)

In each embodiment, a TCI state of Rel. 17 / unified TCI state is referred to simply as a TCI state in some cases. In each embodiment, a TCI state of Rel. 17 / unified TCI state is referred to as a TCI state of Rel. 17 / unified TCI state in some cases when it is necessary to differentiate a TCI state of Rel. 17 / unified TCI state from a TCI state of Rel. 15/16.

In each embodiment, a target channel may be at least one of UE-dedicate reception on a PDSCH/PDCCH and a dynamic grant / configured grant PUSCH and a dedicated PUCCH resource, may be at least one of UE-dedicated reception on a PDSCH/PDCCH and a dynamic grant/configured grant PUSCH and all the dedicated PUCCH resources, may be a UE-dedicated channel / UE-dedicated reception / UE-dedicated transmission / UE-dedicated RS / UE-dedicated channel resource, or may be a channel/RS to which a unified TCI state is applied.

In the present disclosure, UE-dedicated reception on a PDSCH/PDCCH, reception of a PDSCH/PDCCH configured by a PDSCH configuration (PDSCH-Config) / PDCCH configuration (PDCCH-Config), a UE-dedicated PDSCH/PDCCH, and a UE-dedicated PDSCH/PDCCH resource may be interchangeably interpreted. In the present disclosure, a dynamic grant / configured grant PUSCH, a PUSCH configured by PUSCH configuration (PUSCH-Config) / configured grant configuration (ConfiguredGrantConfig), a UE-dedicated PUSCH, and a UE-dedicated PUSCH resource may be interchangeably interpreted. In the present disclosure, a dedicated PUCCH resource, a PUCCH resource configured by a PUCCH configuration (PUCCH-Config), a UE-dedicated PUCCH, and a UE-dedicated PUCCH resource may be interchangeably interpreted.

In each embodiment, a specific channel/signal, a specific channel / signal / resource / resource set, a specific signal, a specific channel, a specific resource, a resource / resource set of a specific channel/RS, a specific channel / RS / resource / resource set, and one of a PDSCH/PDCCH/CSI-RS/PUSCH/PUCCH/SRS/CORESET may be interchangeably interpreted.

In each embodiment, a specific channel/RS sharing the same TCI state with a target channel, a specific channel/RS sharing a TCI state indicated for a target channel, the TCI state of a specific channel/RS being configured/indicated together with the TCI state of a target channel, the TCI state of a specific channel/RS referring to the TCI state of a target channel, a TCI state being shared between a specific channel/RS and a target channel, the same TCI state being applied to both a specific channel/RS and a target channel, the TCI state of a specific channel/RS being the same as the TCI state of a target channel, the TCI state of a specific channel/RS being the same as a unified TCI state, and the TCI state of a specific channel/RS being updated/indicated/configured by a unified TCI state may be interchangeably interpreted.

In each embodiment, a TCI state for a specific channel/RS may be a TCI state only for the specific channel/RS or may be a unified TCI state.

For a second channel/signal possible to share the same Rel-17 TCI state as the Rel-17 TCI state of a first channel/RS (Rel-17 TCI state indicated/updated by a TCI state indication using a MAC CE / DCI of Rel. 17, unified TCI state), at least one of RRC configurations 1 and 2 below may be performed. The first channel/RS may include UE-dedicated reception on a PDSCH/PDCCH (UE-dedicated PDSCH/PDCCH), may include a dynamic-grant/configured-grant based PUSCH, or may include the TCI state of all the dedicated PUCCH resources (UE-dedicated PUCCHs) (unified TCI state / common beam). The indicated Rel-17 TCI state may be applied to the first/second channel/signal.

### {RRC Configuration 1}

For DL, the second channel/RS in DL possible to share the same Rel-17 TCI state as the Rel-17 TCI state of the first channel/RS (Rel-17 TCI state indicated by a TCI state indication using a MAC CE / DCI of Rel. 17, unified TCI state) is configured via RRC (RRC IE). The first channel/RS may be the same TCI state (unified TCI state / common beam) as the TCI state of UE-dedicated reception of a PDSCH/PDCCH. The second channel in DL may be a non-UE dedicated (common/group-common) PDCCH/PDSCH associated with the physical cell identifier (PCI) of a serving cell or an aperiodic (AP)-CSI-RS for beam management (BM) or CSI.

### {RRC Configuration 2}

For UL, the second channel/RS in UL possible to share the same Rel-17 TCI state as the Rel-17 TCI state of the first channel/RS (Rel-17 TCI state indicated by a TCI state indication using a MAC CE / DCI of Rel. 17, unified TCI state) is configured via RRC (RRC IE). The first channel/RS may be at least one of a dynamic grant / configured grant based PUSCH and all the dedicated PUCCH resources. The second channel in UL may be an SRS for BM, for antenna switching, or for codebook/non-codebook based UL transmission.

A channel/RS other than the first/second channel/RS may be referred to as a third channel/RS. The third channel/RS may be a channel/RS not possible to share the same Rel-17 TCI state as the Rel-17 TCI state of the first channel/RS or may be a channel/RS not configured to be able to share the same Rel-17 TCI state as the Rel-17 TCI state of the first channel/RS among channels/RSs other than the first channel/RS.

As a TCI state in Rel. 17, a shared TCI state shared with the first channel/RS (unified TCI state applied to the first channel/RS and the second channel/RS) and a non-shared TCI state not shared with the first channel/RS (TCI state for the third channel/RS) are studied. The shared TCI state may be a unified TCI state / common beam. The non-shared TCI state may be a TCI state for the third channel/RS, may be a TCI state of Rel. 15/16 (TCI state applied to one type of channel/RS), or may be a TCI state applied to the third channel/RS and not shared with the first/second channel/RS. When the unified TCI state is updated by one MAC CE / DCI, the shared TCI state (TCI state applied to the first/second channel/RS) may be updated while the non-shared TCI state (TCI state applied to the third channel/RS) need not be updated.

If the UE is configured by using a TCI state of Rel. 17 in any CC, the UE need not assume to be configured by using a TCI state / spatial relation information of Rel. 15/16. This may be applied to a UE that supports that N or more unified TCI states are configured for each CC. Here, N may be 64 for FR2 or may be the maximum number of SSBs configured for FR1. With this, it is possible to prevent a TCI state of Rel. 17 and a TCI state / spatial relation information of Rel. 15/16 from being configured simultaneously, which can suppress UE load.

In this case, a non-shared TCI state may be configured/indicated for a channel/RS not configured with a unified TCI state / common beam (third channel/RS, for example, a channel/RS for which a TCI state synchronized with a common beam is not to be updated, such as a TRS and a P/SP-CSI-RS, third channel/RS). In contrast, for the first channel/RS (for example, a UE-dedicated PDSCH, a PDCCH using a UE-specific search space (USS) (UE-dedicated PDCCH)), a shared TCI state may be configured/indicated.

### <First Embodiment>

In a first embodiment, an SRI (SRS indicator) applied to multi-PUSCH will be described.

The multi-PUSCH may be interpreted as one or more PUSCHs scheduled by single DCI. The multi-PUSCH may be provided to transmission of different data (for example, transport block / UL-SCH) or may be applied to transmission of the same data.

When the multi-PUSCH is configured/scheduled, at least one of option 1-1 to option 1-3 below may be applied. Note that option 1-1/1-2 corresponds to a case where an SRI field included in DCI is not enhanced, and option 1-3 corresponds to a case where an SRI field is enhanced.

### {Option 1-1}

One SRI (for example, a spatial domain filter) determined in an existing system (for example, Rel. 15/16) may be applied to a plurality of PUSCHs (for example, all the PUSCHs) scheduled.

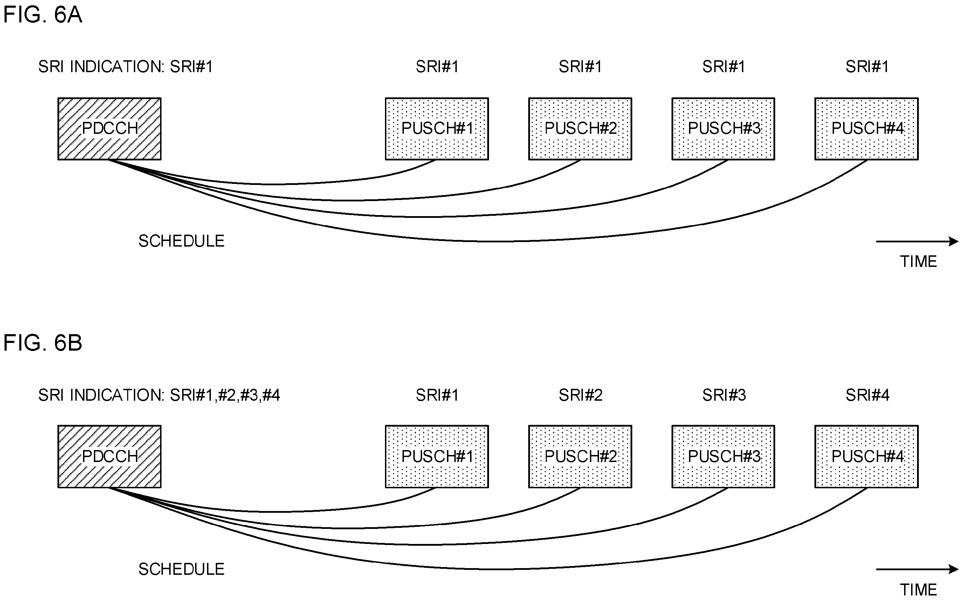

FIG. 6A shows a case where four PUSCHs (here, PUSCHs #1 to #4) are scheduled by DCI (or a PDCCH). FIG. 6A also shows a case where a specific SRI (here, SRI #1) is indicated by an SRI field (for example, a certain codepoint) included in the DCI. The UE may apply SRI #1 to each of PUSCHs #1 to #4, based on the DCI, to control transmission.

### {Option 1-2}

By a higher layer, the codepoint of one SRI field may be configured to correspond to a plurality of SRIs (for example, spatial domain filters), and the plurality of SRIs may be applied to a plurality of respective PUSCHs.

FIG. 6B shows a case where four PUSCHs (here, PUSCHs #1 to #4) are scheduled by DCI (or a PDCCH). FIG. 6B also shows a case where a plurality of SRIs (here, SRIs #1 to #4) are indicated by an SRI field (for example, a certain codepoint) included in the DCI. The UE may apply SRIs #1 to #4 to respective PUSCHs #1 to #4, based on the DCI, to control transmission.

### {Option 1-3}

Two or more SRI fields may be configured in DCI, and an SRI corresponding to each of a plurality of PUSCHs may be indicated by a corresponding one of the SRI fields.

FIG. 6B shows a case where four PUSCHs (here, PUSCHs #1 to #4) are scheduled by DCI (or a PDCCH). FIG. 6B also shows a case where a plurality of SRIs (here, SRIs #1 to #4) are indicated by a plurality of SRI fields (for example, SRI fields #1 to #4) included in the DCI. The UE may apply SRIs #1 to #4 to respective PUSCHs #1 to #4, based on the plurality of SRI fields in the DCI, to control transmission.

Option 1-1 to option 1-3 may be switched by an indication from a base station (for example, higher layer signaling) for application.

As described above, by using at least one of option 1-1 to option 1-3 to control a spatial relation (for example, an SRI) to be applied to multi-PUSCH, the multi-PUSCH can be performed appropriately.

### <Second Embodiment>

In a second embodiment, a case where a unified TCI state (for example, a Rel. 17 unified TCI state) is configured for multi-PDSCH will be described.

In the present disclosure, whether a unified TCI state (for example, a Rel-17 TCI state) is applied or whether a TCI state of an existing system (for example, Rel. 15/16) is applied may be configured/indicated by RRC / MAC CE / DCI.

The multi-PDSCH (or a TCI state configured for the multi-PDSCH (for example, a unified TCI state)) may be configured to be shared with a target channel (or to be indicated with the same TCI state as that of the target channel) (case 2-1). The target channel may be UE-dedicated reception on a PDSCH/PDCCH, a dynamic grant / configured grant PUSCH, and a dedicated PUCCH resource.

Alternatively, the multi-PDSCH (or a TCI state configured for the multi-PDSCH (for example, a unified TCI state)) may be configured not to be shared with a target channel (or not to be indicated with the same TCI state as that of the target channel) (case 2-2). In this case, the TCI state of the multi-PDSCH may be determined based on a mechanism of an existing system (for example, Rel. 15/16).

The unified TCI state may be indicated by a MAC CE or a MAC CE + DCI. When the unified TCI state is indicated by DCI, the assumption of the unified TCI state may be switched after the unified TCI state is indicated or after the elapse of a certain period (for example, Y symbols) from ACK (or ACK/NACK) transmission. The certain period (for example, Y) may be reported through UE capability / configured by a higher layer parameter.

Update/change of the unified TCI state by DCI may be applied at least to case 2-1. Note that update/change of the unified TCI state by DCI need not be performed in case 2-2. This is because a TCI state in case 2-2 (for example, a TCI state applied to the multi-PDSCH) may be applied to a UE common RS such as a P/SP-CSI and it is difficult to perform beam change in a UE-dedicated manner in this case.

When the unified TCI state is applied/configured for the multi-PDSCH, a configuration of not indicating a beam (for example, a TCI state) of a PDSCH scheduled by scheduling DCI may be used.

Hence, among case 1 to case 3 described above, defining of case 1 and case 3 may be unnecessary.

For example, when no TCI state field is present in DCI and the DCI schedules one or more PDSCHs and the period between the DCI and the PDSCH(s) (for example, the PDSCH scheduled first in the time domain) is equal to or longer than the certain period (for example, timeDurationForQCL), the unified TCI state may be used to control reception of a plurality of PDSCHs. Irrespective of whether a TCI state field is present in DCI, when the period between the DCI and the PDSCH(s) is shorter than the certain period, the unified TCI state may be used to be applied to a plurality of PDSCHs (for example, all the PDSCHs).

When the unified TCI state is configured for the multi-PDSCH, DCI schedules one or more PDSCHs, and the period between the DCI and the PDSCH(s) is equal to or longer than the certain period (for example, timeDurationForQCL), an indicated unified TCI state (for example, indicated TCI-State) may be applied to a plurality of PDSCHs (for example, all the PDSCHs). The unified TCI state may be indicated by a certain MAC CE / higher layer parameter / DCI.

When the unified TCI state is updated/changed by DCI, the UE may apply the update/change of the TCI state certain symbols after ACK (or ACK/NACK) transmission. In this case, when a plurality of PDSCHs are scheduled each of before certain symbols and after certain symbols, the unified TCI state after the update/change may be applied to the PDSCH after the certain symbols, and the TCI state before the update/change may be applied to the PDSCH before the certain symbols.

When the TCI state (for example, the unified TCI state) is indicated by using DCI, at least one of option 2-1 to option 2-3 below may be applied. Note that option 2-1/2-2 corresponds to a case where the TCI state field included in DCI is not enhanced, and option 2-3 corresponds to a case where the TCI state field is enhanced. When a certain higher layer parameter (for example, a parameter related to a unified TCI state) is configured, the TCI state field included in DCI may be interpreted as an indication of a unified TCI state.

### {Option 2-1}

One DL/UL TCI or a DL only TCI state may be applied to a plurality of PDSCHs (for example, all the PDSCHs) scheduled.

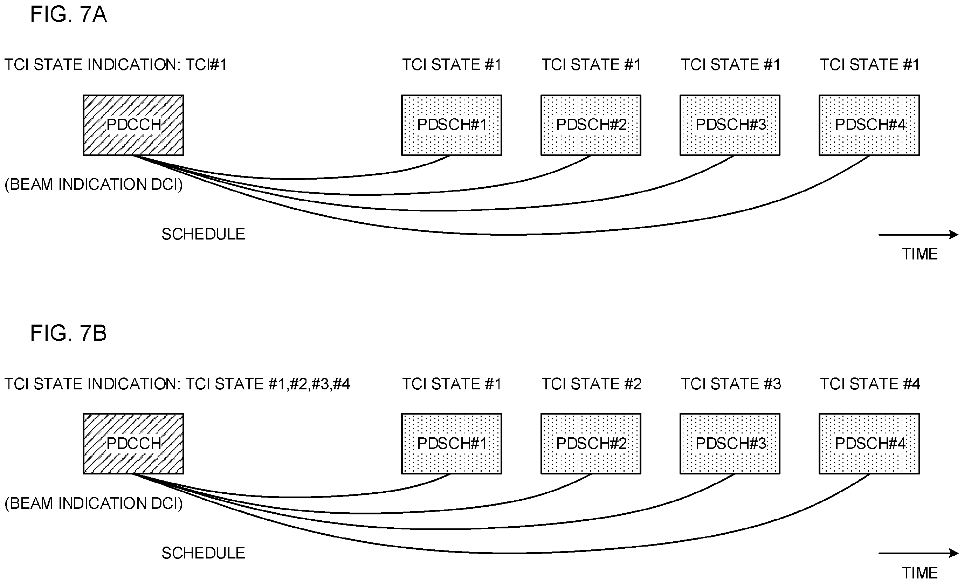

FIG. 7A shows a case where four PDSCHs (here, PDSCHs #1 to #4) are scheduled by DCI (or a PDCCH). FIG. 7A also shows a case where a specific TCI state (here, TCI state #1) is indicated by a TCI state field / beam indication field (for example, a certain codepoint) included in the DCI. The UE may apply TCI state #1 to each of PDSCHs #1 to #4, based on the DCI, to control reception.

### {Option 2-2}

By a higher layer, the codepoint of one TCI state field may be configured to correspond to a plurality of TCI states (for example, DL/UL TCI states or DL only TCI states), and the plurality of TCI states may be applied to a plurality of respective PDSCHs.

FIG. 7B shows a case where four PDSCHs (here, PDSCHs #1 to #4) are scheduled by DCI (or a PDCCH). FIG. 7B also shows a case where a plurality of TCI states (here, TCI states #1 to #4) are indicated by a TCI state field / beam indication field (for example, a certain codepoint) included in the DCI. The UE may apply TCI states #1 to #4 to respective PDSCHs #1 to #4, based on the DCI, to control reception.

### {Option 2-3}

Two or more TCI state fields may be configured in DCI, and TCI states (for example, DL/UL TCI states or DL only TCI states) corresponding to a plurality of respective PUSCHs may be indicated by respective TCI state fields.

FIG. 7B shows a case where four PDSCHs (here, PDSCHs #1 to #4) are scheduled by DCI (or a PDCCH). FIG. 7B also shows a case where a plurality of TCI states (here, TCI states #1 to #4) are indicated by a plurality of respective TCI state fields (for example, TCI state fields #1 to #4) included in the DCI. The UE may apply TCI states #1 to #4 to respective PDSCHs #1 to #4, based on the plurality of TCI state fields in the DCI, to control reception.

When an indication is made by DCI in option 2-1 to option 2-3, update/change of a TCI state may be applied certain symbols after ACK (or ACK/NACK) transmission. The update/change of a TCI state may be indicated by a MAC CE instead of DCI. Option 2-1 to option 2-3 may be switched by an indication from a base station (for example, higher layer signaling) for application.

Note that option 2-1 to option 2-3 may be applied by certain DCI. The certain DCI may be beam indication DCI without DL assignment (for example, beam indication DCI without DL assignment) or may be UL grant / group common DCI, for example.

### <Third Embodiment>

In a third embodiment, a case where a unified TCI state (for example, a Rel. 17 unified TCI state) is configured for multi-PUSCH will be described.

The multi-PUSCH (or a TCI state configured for the multi-PUSCH (for example, a unified TCI state)) may be configured to be shared with a target channel (or to be indicated with the same TCI state as that of the target channel) (case 3-1). The target channel may be UE-dedicated reception on a PDSCH/PDCCH, a dynamic grant / configured grant PUSCH, and a dedicated PUCCH resource.

Alternatively, the multi-PUSCH (or a TCI state configured for the multi-PUSCH (for example, a unified TCI state)) may be configured not to be shared with a target channel (or not to be indicated with the same TCI state as that of the target channel) (case 3-2). In this case, the TCI state of the multi-PUSCH may be determined based on a mechanism of the first embodiment.

The unified TCI state may be indicated by a MAC CE or a MAC CE + DCI. When the unified TCI state is indicated by DCI, the assumption of the unified TCI state may be switched after the unified TCI state is indicated or after the elapse of a certain period (for example, Y symbols) from ACK (or ACK/NACK) transmission. The certain period (for example, Y) may be reported through UE capability / configured by a higher layer parameter.

Update/change of the unified TCI state by DCI may be applied at least to case 3-1. Note that update/change of the unified TCI state by DCI need not be performed in case 3-2. This is because a TCI state in case 3-2 (for example, a TCI state applied to the multi-PUSCH) may be applied to a UE common RS such as a P/SP-CSI and it is difficult to perform beam change in a UE-dedicated manner in this case.

When the unified TCI state is applied/configured for the multi-PUSCH, a configuration of not indicating a beam (for example, a TCI state) of a PUSCH scheduled by scheduling DCI may be used.

Hence, among case 1 to case 3 described above, defining of case 1 and case 3 may be unnecessary.

For example, when no TCI state field (or no SRI field) is present in DCI and the DCI schedules one or more PUSCHs and the period between the DCI and the PUSCH(s) is equal to or longer than the certain period (for example, timeDurationForQCL), the unified TCI state may be used to control transmission of a plurality of PUSCHs. Irrespective of whether a TCI state field (or an SRI field) is present in DCI, when the period between the DCI and the PUSCH(s) is shorter than the certain period, the unified TCI state may be used to be applied to a plurality of PUSCHs (for example, all the PUSCHs).

When the unified TCI state is configured for the multi-PUSCH, DCI schedules one or more PUSCHs, and the period between the DCI and the PUSCH(s) is equal to or longer than the certain period (for example, timeDurationForQCL), an indicated unified TCI state (for example, indicated TCI-State) may be applied to a plurality of PUSCHs (for example, all the PUSCHs). The unified TCI state may be indicated by a certain MAC CE / higher layer parameter / DCI.

When the unified TCI state is updated/changed by DCI, the UE may apply the update/change of the TCI state certain symbols after ACK (or ACK/NACK) transmission. In this case, when a plurality of PUSCHs are scheduled each of before certain symbols and after certain symbols, the unified TCI state after the update/change may be applied to the PUSCH after the certain symbols, and the TCI state before the update/change may be applied to the PUSCH before the certain symbols.

When the TCI state (for example, the unified TCI state) is indicated by using DCI, at least one of option 3-1 to option 3-3 below may be applied. Note that option 3-1/3-2 corresponds to a case where the TCI state field included in DCI is not enhanced, and option 2-3 corresponds to a case where the TCI state field is enhanced. When a certain higher layer parameter (for example, a parameter related to a unified TCI state) is configured, the TCI state field included in DCI may be interpreted as an indication of a unified TCI state.

### {Option 3-1}

One DL/UL TCI or a UL only TCI state may be applied to a plurality of PUSCHs (for example, all the PUSCHs) scheduled.

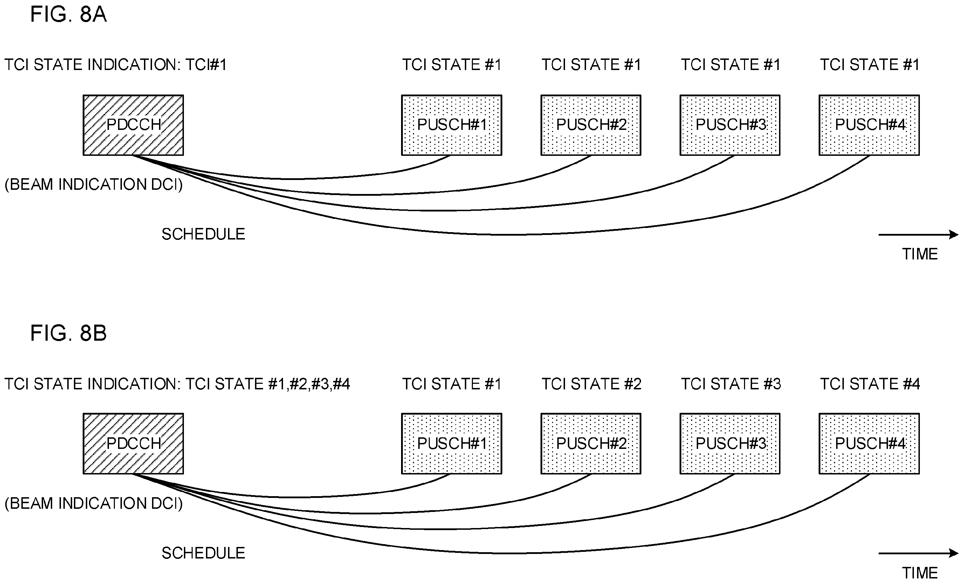

FIG. 8A shows a case where four PUSCHs (here, PUSCHs #1 to #4) are scheduled by DCI (or a PDCCH). FIG. 8A also shows a case where a specific TCI state (here, TCI state #1) is indicated by a TCI state field / beam indication field (for example, a certain codepoint) included in the DCI. The UE may apply TCI state #1 to each of PUSCHs #1 to #4, based on the DCI, to control transmission.

### {Option 3-2}

By a higher layer, the codepoint of one TCI state field may be configured to correspond to a plurality of TCI states (for example, DL/UL TCI states or UL only TCI states), and the plurality of TCI states may be applied to a plurality of respective PUSCHs.

FIG. 8B shows a case where four PUSCHs (here, PUSCHs #1 to #4) are scheduled by DCI (or a PDCCH). FIG. 8B also shows a case where a plurality of TCI states (here, TCI states #1 to #4) are indicated by a TCI state field / beam indication field (for example, a certain codepoint) included in the DCI. The UE may apply TCI states #1 to #4 to respective PUSCHs #1 to #4, based on the DCI, to control transmission.

### {Option 3-3}

Two or more TCI state fields may be configured in DCI, and TCI states (for example, DL/UL TCI states or UL only TCI states) corresponding to a plurality of respective PUSCHs may be indicated by respective TCI state fields.

FIG. 8B shows a case where four PUSCHs (here, PUSCHs #1 to #4) are scheduled by DCI (or a PDCCH). FIG. 8B also shows a case where a plurality of TCI states (here, TCI states #1 to #4) are indicated by a plurality of respective TCI state fields (for example, TCI state fields #1 to #4) included in the DCI. The UE may apply TCI states #1 to #4 to respective PUSCHs #1 to #4, based on the plurality of TCI state fields in the DCI, to control transmission.

When an indication is made by DCI in option 3-1 to option 3-3, update/change of a TCI state may be applied certain symbols after ACK (or ACK/NACK) transmission. The update/change of a TCI state may be indicated by a MAC CE instead of DCI. Option 3-1 to option 3-3 may be switched by an indication from a base station (for example, higher layer signaling) for application.

Note that option 3-1 to option 3-3 may be applied by certain DCI. The certain DCI may be beam indication DCI without DL assignment (for example, beam indication DCI without DL assignment) or may be UL grant / group common DCI, for example.

Note that, although a description has been given of the TCI state(s) in the third embodiment, this is not restrictive. For example, when it is configured that a PL-RS or a TPC parameter (P0, a, CL index) is associated with a TCI state, the PL-RS / TPC command parameter may be applied to each PUSCH transmission in synchronization with an indication of the TCI state.

### <Fourth Embodiment>

In a fourth embodiment, a description will be given of a case of switching UE operation according to the search space type (for example, a common search space (CSS) / UE-specific search space (USS)) / format of DCI or a TCI state / spatial relation information configured for multi-PUSCH/multi-PDSCH.

The DCI may be DCI for scheduling multi-PUSCH/multi-PDSCH or DCI performing beam indication (or indication of a unified TCI state).

When the search space type (SS type) of the DCI is USS, at least one of case 2-1 of the second embodiment and case 3-1 of the third embodiment may be applied. In contrast, when the search space type (SS type) of the DCI is CSS, at least one of case 2-2 of the second embodiment and case 3-2 of the third embodiment may be applied.

When the search space type (SS type) of the DCI is USS, at least one of option 2-2/2-3 of the second embodiment and option 3-2/3-3 of the third embodiment may be applied. In contrast, when the search space type (SS type) of the DCI is USS, at least one of option 2-1 of the second embodiment and option 3-1 of the third embodiment may be applied.

The UE operation may be switched based on the format of the DCI (for example, whether the format is a specific DCI format).

For example, when the DCI format is DCI format 1_1/1_2/0_1/0-2, at least one of case 2-1 of the second embodiment and case 3-1 of the third embodiment may be applied. In contrast, when the DCI format is other than these (for example, DCI format 1_0/0_0/2_x), at least one of case 2-2 of the second embodiment and case 3-2 of the third embodiment may be applied.

When the DCI format is DCI format 1_1/1_2/0_1/0_2, at least one of option 2-2/2-3 of the second embodiment and option 3-2/3-3 of the third embodiment may be applied. In contrast, when the DCI format is other than these (for example, DCI format 1_0/0_0/2_x), at least one of option 2-1 of the second embodiment and option 3-1 of the third embodiment may be applied.

The UE operation may be switched based on the TCI state / spatial relation information (for example, TCI state / spatial-relation-info) configured for the multi-PUSCH/multi-PDSCH.

For example, when a unified TCI state (for example, Rel-17 unified TCI state) is configured for the multi-PUSCH/multi-PDSCH, at least one of case 2-1 of the second embodiment and case 3-1 of the third embodiment may be applied. In contrast, when other than the above is configured (for example, Rel-15/16 TCI state / spatial relation information is configured), at least one of case 2-2 of the second embodiment and case 3-2 of the third embodiment may be applied.

When a unified TCI state (for example, Rel-17 unified TCI state) is configured for the multi-PUSCH/multi-PDSCH, at least one of option 2-2/2-3 of the second embodiment and option 3-2/3-3 of the third embodiment may be applied. In contrast, when other than the above is configured (for example, Rel-15/16 TCI state / spatial relation information is configured), at least one of option 2-1 of the second embodiment and option 3-1 of the third embodiment may be applied.

### <Fifth Embodiment>

In a fifth embodiment, a case where TCI state indication is performed based on the number of configured TCI states will be described.

The number of TCI states corresponding to each of one or more TRPs may be defined. For example, the number N (≥ 1) of TCI states applied to a UL channel/RS (UL TCI states) and the number M (≥ 1) of TCI states applied to a DL channel/RS (DL TCI states) may be defined. At least one of N and M may be notified/configured/indicated to the UE via higher layer signaling / physical layer signaling.

In the present disclosure, when it is described that N = M = X (X is any integer), this may mean that X TCI states (corresponding to X TRPs) common to UL and DL (joint TCI states) are notified/configured/indicated to the UE.

When it is described that N = X (X is any integer) and M = Y (Y is any integer, Y = X may hold), this may mean that X UL TCI states (corresponding to X TRPs) and Y DL TCI states (corresponding to Y TRPs) are notified/configured/indicated separately to the UE. The UL TCI states and the DL TCI states may mean TCI states common to UL and DL (in other words, joint TCI states) or may mean TCI states for each of UL and DL (in other words, separate TCI states).

For example, when it is described that N = M = 1, this may mean that one TCI state common to UL and DL for a single TRP is notified/configured/indicated to the UE (joint TCI state for a single TRP).

For example, when it is described that N = 1 and M = 1, this may mean that one UL TCI state and one DL TCI state for a single TRP are notified/configured/indicated separately to the UE (separate TCI states for a single TRP).

For example, when it is described that N = M = 2, this may mean that a plurality of (two) TCI states common to UL and DL for a plurality of (two) TRPs are notified/configured/indicated to the UE (joint TCI states for a plurality of TRPs).

For example, when it is described that N = 2 and M = 2, this may mean that a plurality of (two) UL TCI states and a plurality of (two) DL TCI states for a plurality of (two) TRPs are notified/configured/indicated to the UE (separate TCI states for a plurality of TRPs).

For example, when it is described that N = 2 and M = 1, this may mean that two TCI states common to UL and DL are notified/configured/indicated to the UE. In this case, the UE may use the two configured/indicated TCI states as UL TCI states while using one TCI state of the two configured/indicated TCI states as a DL TCI state.

For example, when it is described that N = 2 and M = 1, this may mean that two UL TCI states and one DL TCI state are notified/configured/indicated to the UE as separate TCI states.

Note that, in the above example, cases where the values N and M are each one or two have been described. However, the values N and M may each be three or more, or N and M may be different from each other.

A case where M > 1 / N > 1 may indicate at least one of a TCI state indication for a plurality of TRPs and a plurality of TCI state indications for inter-band (inter band) CA.

Assume a case where M > 1 / N > 1. In this case, when a plurality of sets of TCI states (for example, a DL/UL TCI state(s), a DL only TCI state(s), and a UL only TCI state(s)) are indicated by a MAC CE or a MAC CE + DCI, the plurality of sets of TCI states may be applied to each PDSCH / each PUSCH of the multi-PDSCH/multi-PUSCH.

Indication of TCI states in a case where M > 1 / N > 1 may enhance a TCI state field (for example, configure a plurality of TCI state fields for the DCI) to use the TCI state fields to indicate a plurality of TCI states.

The indication of TCI states in a case where M > 1 / N > 1 may be performed without enhancing a TCI state field (for example, configure one TCI state field for the DCI). For example, the one TCI state field may be used to indicate a plurality of TCI states. As an example, RRC / MAC CE may be used so that a plurality of TCI states correspond to one certain codepoint of the TCI state field, for indication.

As described above, DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

### (UE Capability)

In the first embodiment to the fifth embodiment above, the following UE capabilities may be configured. Note that the following UE capabilities may each be interpreted as a parameter (for example, a higher layer parameter) configured for the UE by a network (for example, a base station).

UE capability information related to whether each of the cases/options described above may be defined. For example, UE capability information related to whether to support a case where a PDCCH corresponds to PDCCH repetition may be defined. Moreover, UE capability information related to whether configuration/application of a unified TCI state is supported for multi-PDSCH/multi-PUSCH may be defined.

UE capability information related to whether to support a unified TCI state for each CORESET pool index of multi-PDSCH using multi-DCI in multi-TRP may be defined. For example, UE capability information related to whether to support a case where a PDCCH corresponds to PDCCH repetition using a unified TCI state may be defined.

UE capability information related to whether the UE supports first subcarrier spacing (SCS) / second subcarrier spacing may be defined. The first subcarrier spacing may be 480 kHz, for example, and the second subcarrier spacing may be 960 kHz, for example.

UE capability information related to whether the UE supports operation in a certain frequency range (or frequencies above a certain frequency) may be defined. The certain frequency range may be 52.6 GHz to 71 GHz, for example. Alternatively, the certain frequency range may be FR2-2 (or FR2), for example. The certain frequency may be 52.6 GHz, for example.

Note that whether to apply one of the above embodiments may be determined according to whether the UE is operating in the subcarrier spacing without defining the subcarrier spacing (for example, the first subcarrier spacing / second subcarrier spacing) as UE capability.

Alternatively, whether to apply one of the above embodiments may be determined according to whether the UE is operating in the certain frequency range without defining the certain frequency range as UE capability.

The above embodiments may be configured to be applied to a UE that supports/reports at least one of the above-described UE capabilities. Alternatively, the above embodiments may be configured to be applied to a UE configured by a network.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

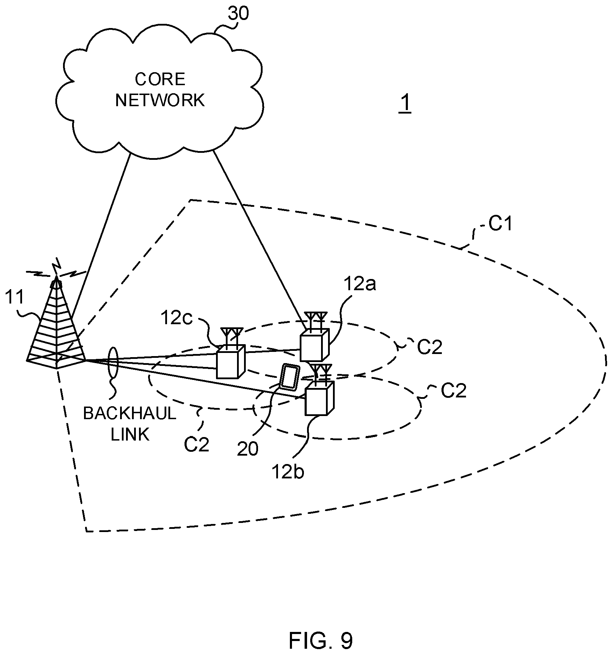

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

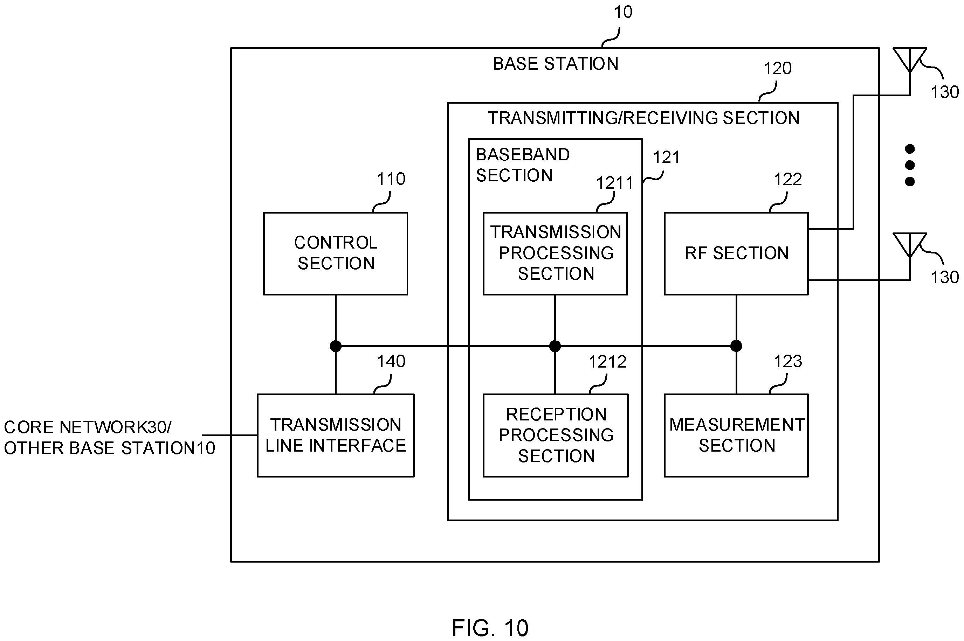

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit downlink control information for scheduling a plurality of shared channels supporting a unified transmission configuration indicator (TCI).

The control section 110 may control reception or transmission of the plurality of shared channels, based on a first TCI state configured commonly for a plurality of channels or a plurality of transmission directions or a second TCI state different from the first TCI state.

### (User Terminal)

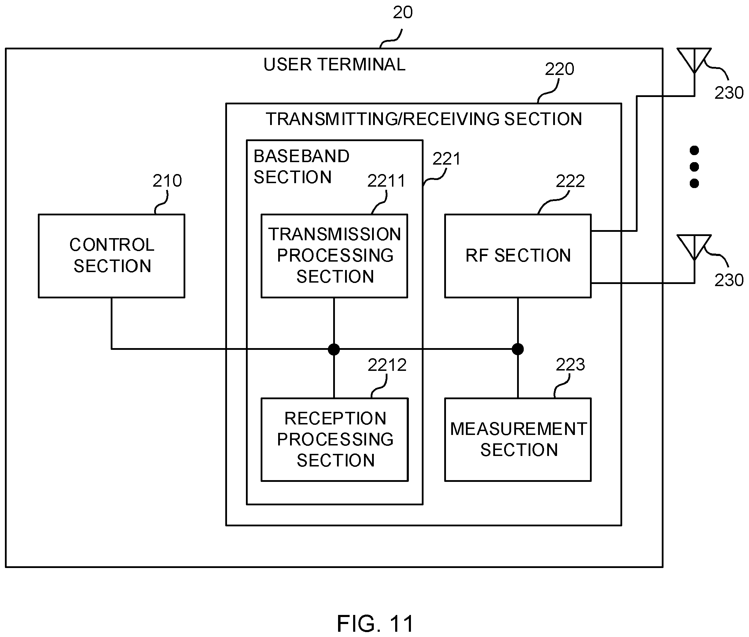

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information for scheduling a plurality of shared channels supporting a unified transmission configuration indicator (TCI). The transmitting/receiving section 220 may use at least one of the downlink control information and MAC control information to receive information related to a plurality of unified TCI states to be applied to the plurality of respective shared channels.

The control section 210 may control reception or transmission of the plurality of shared channels, based on a first TCI state configured commonly for a plurality of channels or a plurality of transmission directions or a second TCI state different from the first TCI state.

The second TCI state may be indicated by a field for notification of a TCI state included in the downlink control information.

The control section 210 may perform control to apply the first TCI state to the plurality of TCI states at least one of when a period between the downlink control information and the plurality of shared channels is equal to or longer than a certain period and when the period is shorter than the certain period.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

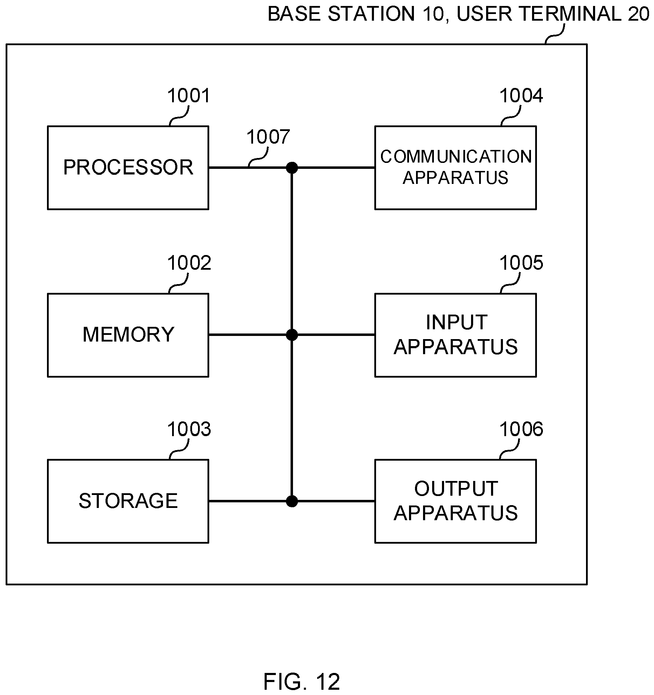

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

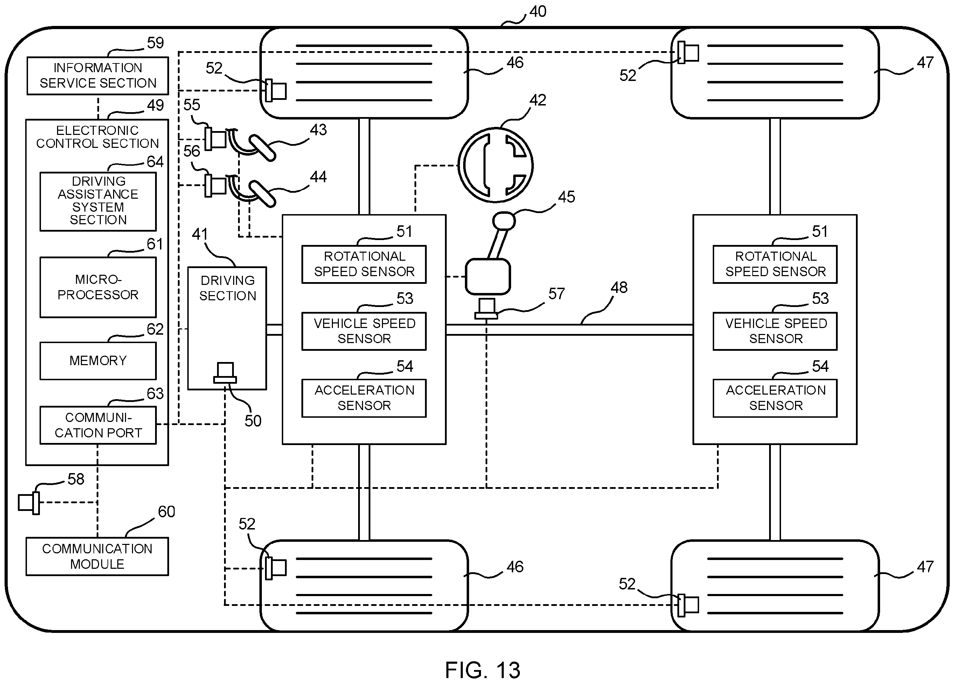

FIG. 13 is a diagram to show an example of a vehicle according to one embodiment. As shown in FIG. 13, a vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to -58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to -58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the above-described various sensors 50 to 58 input to the electronic control section 49 and information obtained based on the signals, to the external apparatus via radio communication.

The communication module 60 receives various pieces of information (traffic information, signal information, inter-vehicle distance information, and the like) transmitted from the external apparatus, and displays the various pieces of information on the information service section 59 included in the vehicle. The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to -58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on JP 2021-185997 filed on November 15, 2021, the entire contents of which are incorporated herein by reference.

## Claims

1. A terminal comprising:
a receiving section that receives downlink control information for scheduling a plurality of shared channels supporting a unified transmission configuration indicator (TCI); and
a control section that controls reception or transmission of the plurality of shared channels, based on a first TCI state configured commonly for a plurality of channels or a plurality of transmission directions or a second TCI state different from the first TCI state.

2. The terminal according to claim 1, wherein
the second TCI state is indicated by a field for notification of a TCI state included in the downlink control information.

3. The terminal according to claim 1 or 2, wherein
the receiving section receives information related to a plurality of unified TCI states to be applied to the plurality of respective shared channels using at least one of the downlink control information and MAC control information.

4. The terminal according to any one of claims 1 to 3, wherein
the control section performs control to apply the first TCI state to the plurality of TCI states at least one of when a period between the downlink control information and the plurality of shared channels is equal to or longer than a certain period and when the period is shorter than the certain period.

5. A radio communication method for a terminal, the radio communication method comprising:
receiving downlink control information for scheduling a plurality of shared channels supporting a unified transmission configuration indicator (TCI); and
controlling reception or transmission of the plurality of shared channels, based on a first TCI state configured commonly for a plurality of channels or a plurality of transmission directions or a second TCI state different from the first TCI state.

6. A base station comprising:
a transmitting section that transmits downlink control information for scheduling a plurality of shared channels supporting a unified transmission configuration indicator (TCI); and
a control section that controls reception or transmission of the plurality of shared channels, based on a first TCI state configured commonly for a plurality of channels or a plurality of transmission directions or a second TCI state different from the first TCI state.
